Europäisches Patentamt

European Patent Office

Office européen des brevets

(11) Veröffentlichungsnummer: **0 314 950 B1**

## (12) EUROPÄISCHE PATENTSCHRIFT

(45) Veröffentlichungstag der Patentschrift: **07.10.92**

(51) Int. Cl.⁵: **F16B 25/00**, F16B 33/04

(21) Anmeldenummer: **88116940.3**

(22) Anmeldetag: **12.10.88**

(54) **Distanzschraube.**

(30) Priorität: **15.10.87 DE 8713879 U**

(43) Veröffentlichungstag der Anmeldung:
**10.05.89 Patentblatt 89/19**

(45) Bekanntmachung des Hinweises auf die
Patenterteilung:
**07.10.92 Patentblatt 92/41**

(84) Benannte Vertragsstaaten:
**AT BE CH DE ES FR GB GR IT LI LU NL SE**

(56) Entgegenhaltungen:
**EP-A- 0 129 404**
**CH-A- 614 761**
**US-A- 2 292 557**
**US-A- 3 524 378**

(73) Patentinhaber: **Hanna, Thomas**
**Augustenstrasse 119**
**W-8000 München 40(DE)**

(72) Erfinder: **Hanna, Thomas**
**Augustenstrasse 119**
**W-8000 München 40(DE)**

(74) Vertreter: **Bunke, Holger, Dr.rer.nat.**
**Dipl.-Chem. et al**
**Patentanwälte Prinz, Leiser, Bunke & Partner**
**Manzingerweg 7**
**W-8000 München 60(DE)**

**Beschreibung**

Die Erfindung betrifft eine Distanzschraube mit einer Ausnehmung zum Einstecken eines Werkzeugs, mit zwei, von einem gewindelosen, zylindrischen Abschnitt voneinander getrennten Gewindeabschnitten, wobei der Nenndurchmesser der Schraube im Bereich des vorderen Gewindeabschnitts und des gewindelosen Abschnitts kleiner ist als im Bereich des hinteren, werkzeugseitigen Gewindeabschnitts und wobei sich die Schraube im Bereich des Übergangs von dem hinteren Gewindeabschnitt zu dem gewindelosen Abschnitt hin konisch verjüngt.

Solche im Handel erhältlichen Distanzschrauben werden zur Befestigung von Bauteilen wie z.B. Paneelen, Zargen, Tür-und Fensterrahmen und dergleichen an Wänden, Böden und Decken verwendet, wobei der vordere Gewindeabschnitt in der Wand, im Boden oder in der Decke mittels eines Dübels verankert wird, während der hintere Gewindeabschnitt der Festlegung des zu befestigenden Bauteils in einem definierten, aber veränderlichen bzw. justierbaren Abstand von der Oberfläche des Gebäudeteils dient. Mit solchen Distanzschrauben können z.B. Türzargen in dafür vorgesehene Wandöffnungen eingesetzt und exakt ausgerichtet werden, und zwar auch dann, wenn die Wandöffnung insgesamt zu groß ist oder wenn die Begrenzungsflächen der Wandöffnung nicht exakt rechtwinklig oder parallel zueinander verlaufen.

Aus CH-A-614 761 ist eine Distanzschraube der eingangs genannten Gattung bekannt, die in dem sich konisch verjüngenden Bereich des Übergangs von dem hinteren Gewindeabschnitt zu dem gewindelosen Abschnitt mindestens zwei Spannuten mit je einer Schneidkante aufweist, die die Aufgabe haben, durch Spanausschnitt die materialverdrängende Wirkung des dickeren Gewindeteils zu reduzieren oder auszuschalten.

Aus US-A-3 124 031 sind Schrauben bekannt, die zwar nicht der eingangs genannten Gattung angehören, weil es sich nicht um Distanzschrauben handelt, die aber zwei verschiedene Gewindeabschnitte besitzen, wobei der Nenndurchmesser der Schraube im Bereich des vorderen Gewindeabschnitts kleiner ist als im Bereich des hinteren, werkzeugseitigen Gewindeabschnitts und wobei sich die Schraube im Bereich des Übergangs vom hinteren Gewindeabschnitt zum vorderen Gewindeabschnitt hin konisch verjüngt. Bei einer besonderen Ausführungsform dieser bekannten Schraube ist im Bereich des sich konisch verjüngenden Übergangs zwischen den beiden Gewindeabschnitten ein als Schneidkante ausgebildeter Längsschlitz vorgesehen. Diese Schneidkante bewirkt, daß das Bohrloch, in das die Schraube eingesetzt wird, spanabhebend erweitert wird und so dem dickeren, hinteren Schraubenteil das Eindringen in das Bohrloch erleichtert, ohne daß die materialverdrängende Wirkung des dickeren Schraubenendes zur Beschädigung oder Zerstörung der Oberfläche des Materials oder Bauteils führt, in dem sich das Bohrloch befindet.

Aus US-A-3 524 378 ist eine weitere Schraube mit zwei, von einem gewindelosen, zylindrischen Abschnitt voneinander getrennten Gewindeabschnitten bekannt, die ebenfalls keine Distanzschraube, sondern eine selbstbohrende Heftschraube mit Schneidkanten im Bereich der Schraubenspitze ist und die dazu bestimmt ist, relativ dünne Bleche zu durchbohren und ohne Abstand fest gegeneinander zu pressen. Bei dieser Schraube weist der gewindelose Abschnitt denselben Nenndurchmesser auf wie der hintere Gewindeabschnitt; es gibt also keinen sich konisch verjüngenden Übergangsbereich zwischen dem hinteren Gewindeabschnitt und dem gewindelosen Abschnitt. Dagegen ist das Gewinde des hinteren Gewindeabschnitts dieser bekannten Schraube tiefer geschnitten und weist steilere und spitzere Gewindeflanken auf als das Gewinde des vorderen Gewindeabschnitts.

Alle diese bekannten Schrauben weisen spanabhebende Schneidkanten auf. Der gewünschte Erfolg wird mit derartigen Schneidkanten jedoch nur dann erzielt, wenn die Schneidkanten eine exakte, definierte Geometrie aufweisen. Es ist jedoch aufwendig und teuer, billige Massenartikel, wie es Schrauben im allgemeinen sind, mit geometrisch exakt definierten Schneidkanten zu versehen. Werden die Schneidkanten dagegen nur eingeschlagen oder eingepreßt, dann erhält man nicht die geforderten exakten Schneidwinkel, sondern mehr oder weniger gerundete Kerben, die die Bezeichnung "Schneidkanten" nicht verdienen und allenfalls eine Zerstörung der Bohrlochinnenwände und des darin von der Schraube eingeschnittenen Innengewindes zur Folge haben.

Aus der im Prioritätsintervall veröffentlichten älteren europäischen Patentanmeldung EP-A-267 153 ist eine Distanzschraube mit einer Ausnehmung zum Einstecken eines Werkzeugs, mit zwei, von einem gewindelosen, zylindrischen Abschnitt voneinander getrennten Gewindeabschnitten, bekannt, bei der der Nenndurchmesser der Schraube im Bereich des vorderen Gewindeabschnitts und des gewindelosen Abschnitts kleiner ist als im Bereich des hinteren, werkzeugseitigen Gewindeabschnitts und wobei sich die Schraube im Bereich des Übergangs von dem hinteren Gewindeabschnitt zu dem gewindelosen Abschnitt hin konisch verjüngt. Bei dieser Distanzschraube weisen beide Gewindeabschnitte gleiche Gewindeganghöhen auf, und der hintere Gewindeabschnitt ist mit einem scharfkantigen Schneidegewinde, vorzugsweise einem Spanplatten-Schraubengewinde oder einem Hoch-Tief-Gewinde, versehen.

Der Erfindung liegt deshalb die Aufgabe zugrunde, eine Distanzschraube der eingangs genannten Gattung zu schaffen, mit der höhere Auszugs- und Ausreißwerte erzielt werden können als mit den derzeit bekannten Distanz- und Doppelgewindeschrauben und bei der gleichzeitig auf besondere Schneidkanten im Bereich des sich konisch verjüngenden Überganges zwischen dem hinteren,dickeren und dem vorderen,dünneren Schraubenteil bzw. zwischen den beiden Gewindeabschnitten verzichtet werden kann, ohne daß die Gefahr besteht, daß durch die Materialverdrängung des hinteren, dickeren Teils die Oberfläche des zu befestigenden Bauteils beschädigt wird.

Diese Aufgabe wird bei einer Distanzschraube der eingangs genannten Gattung erfindungsgemäß dadurch gelöst, daß das Gewinde des hinteren Gewindeabschnitts tiefer geschnitten ist und steilere und spitzere Gewindeflanken aufweist als das Gewinde des vorderen Gewindeabschnitts.

Durch das tiefer eingeschnittene Gewinde des hinteren Gewindeabschnitts wird erfindungsgemäß erreicht, daß das durch den hinteren, dickeren Schraubenteil verdrängte Material in der zwischen den Gewindegängen gebildeten Spiralnut genügend Platz findet, ohne daß die Gefahr besteht, daß die Oberfläche des zu befestigenden Bauteils ausbricht, sich aufwölbt oder auf andere Weise beschädigt wird. Die steileren und spitzeren Gewindeflanken des hinteren Gewindeabschnitts, verglichen mit den flacheren und runderen Gewindeflanken des vorderen Gewindeabschnitts, haben eine genügend ausgeprägte gewindeschneidende Wirkung, so daß auf besondere Schneidkanten in der Form, wie sie z.B. aus der US-PS 3 124 031 bekannt sind, verzichtet werden kann.

Vorzugsweise ist das Gewinde des hinteren Gewindeabschnitts selbstschneidend ausgebildet.

Eine besonders einfache, günstig herstellbare Ausführungsform der Erfindung ist dadurch gekennzeichnet, daß das Gewinde des vorderen Gewindeabschnitts ein Holzschraubengewinde, das Gewinde des hinteren Gewindeabschnitts ein Spanplattenschrauben- oder Blechschraubengewinde ist. Das Holzschraubengewinde entspricht vorzugsweise der DIN-Norm 7998. Bei Verwendung eines Blechschraubengewindes für den hinteren Gewindeabschnitt eignet sich die Distanzschraube insbesondere zur Abstandsmontage von Fensterrahmen und Zargen aus Aluminium oder anderen Metallteilen.

Die selbstschneidende Wirkung des Gewindes des hinteren Gewindeabschnitts ist besonders gut ausgeprägt, wenn der Flankenwinkel des Gewindes kleiner ist als 50° und vorzugsweise 40 ± 4° beträgt.

Die Schneideigenschaften des Gewindes des hinteren Gewindeabschnitts werden weiter dadurch gefördert, daß die Flanken dieses Gewindes einsatzgehärtet sind.

Der an sich nachteilige Einfluß des dickeren, hinteren Schraubenteils auf die Unversehrtheit der Oberfläche des zu befestigenden Bauteils im Bereich eines Bohrlochs oder, falls kein Vorbohren erforderlich ist, im Bereich der Einführungsstelle der Schraube wird auf besonders wirksame Weise dadurch vermindert oder völlig ausgeschaltet, daß der Konuswinkel im Bereich des Übergangs vom hinteren Gewindeabschnitt zum gewindelosen Abschnitt weniger als 25° und vorzugsweise 10 ± 2° beträgt.

Schließlich wird die gewindeschneidende Wirkung des Gewindegangs des hinteren Gewindeabschnitts dadurch gefördert, daß dieser Gewindegang zum gewindelosen Abschnitt hin scharfkantig ausläuft.

Dadurch, daß alle Gewinde etwa gleiche Ganghöhe und gleichsinnige Drehrichtung aufweisen, wird erreicht, daß das beim Eindrehen der Distanzschraube in das zu befestigende Bauteil in dem letzteren gebildete Innengewinde vom vorderen Gewindeabschnitt vorgebildet und vom hinteren Gewindeabschnitt nachgeschnitten wird; dadurch wird verhindert, daß der hintere Gewindeabschnitt das durch den vorderen Gewindeabschnitt vorgebildete Innengewinde wieder zerstört. Auf diese Weise werden optimale Auszugs- und Ausreißwerte erzielt.

Bei einer weiteren vorteilhaften Ausführungsform der erfindungsgemäßen Distanzschraube ist auf dem werkzeugseitigen Ende des hinteren Gewindeabschnitts ein Schlagring gebildet, der es gestattet, die Schraube, falls erwünscht oder erforderlich, so weit mit einem Hammer oder einem anderen Werkzeug einzuschlagen, bis der vordere Gewindeabschnitt einen gewissen Halt in der Wand oder in einem Dübel hat, ohne daß dabei die Gefahr besteht, daß die Ausnehmung zum Einstecken eines Werkzeugs oder der hintere Gewindeabschnitt durch die Hammerschläge beschädigt werden.

Schließlich kann die Ausnehmung zum Einstecken eines Schraubendrehers, Schlüssels oder Bits die Form eines Quer- oder Kreuzschlitzes, eines Innenvielkants, z.B. eines Innensechskants, oder einer Einsteckrosette aufweisen. Ferner kann sich das Gewinde des vorderen Gewindeabschnitts (A) zusätzlich mindestens teilweise über den Mittelabschnitt (B) erstrecken.

Schließlich kann, wie an sich bekannt, die ganze Distanzschraube oder mindestens einer der beiden verschiedenen Gewindeabschnitte mit einer die Gleitreibung herabsetzenden Kunststoffbeschichtung, z.B. aus Polytetrafluoräthylen, versehen sein. Die Schraube oder einzelne Bereiche der Schraube können auch metallische Überzüge, z.B. aus Zink oder Aluminium oder geeigneten Legierungen, tragen, die die mechanischen, elektrischen, chemischen und/oder magnetischen Eigenschaften der Schraube in an sich bekannter Weise beeinflussen können, beispielsweise dem Korrosionsschutz dienen. Schließlich können die beiden verschiedenen Gewindeabschnitte und/oder die werkzeugseitige Ausnehmung oder der Schlagring mit verschiedenenfarbigen Überzügen versehen sein, um bestimmte Nenndurchmesser oder bestimmte Formen der Ausnehmung zu kennzeichnen und damit die Auswahl verschiedener Schraubengrößen oder Schraubentypen oder die Zuordnung der verschiedenen Ausnehmungen zu den verschiedenen, dafür passenden Einsteckwerkzeugen zu erleichtern.

Die Zeichnung zeigt ein Ausführungsbeispiel einer erfindungsgemäßen Distanzschraube. Darin ist:

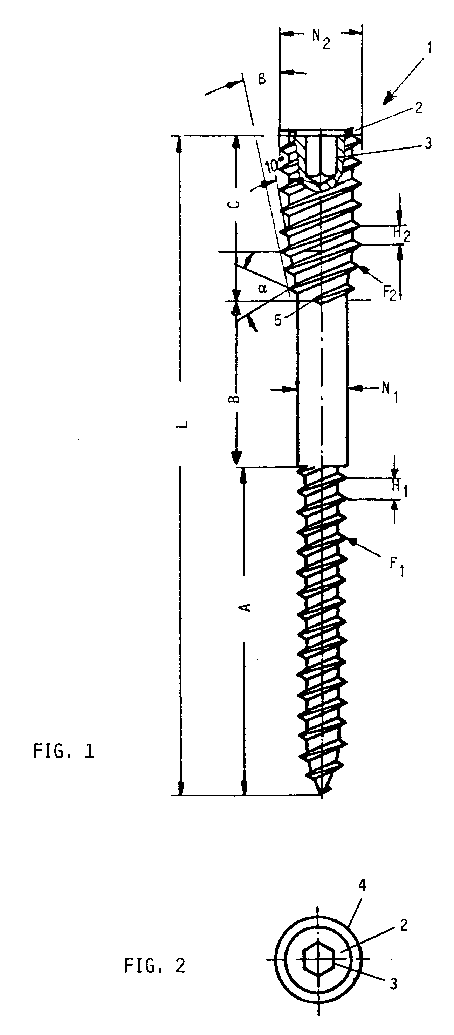

Fig. 1    eine teilweise geschnittene Seitenansicht der Distanzschraube und

Fig. 2    eine Draufsicht auf das hintere, werkzeugseitige Ende der Schraube gemäß Fig. 1.

Die Distanzschraube 1 weist über ihre axiale Länge L im wesentlichen drei verschiedene Abschnitte auf, nämlich einen vorderen Gewindeabschnitt A mit Holzgewinde gemäß DIN 7998, einen mittleren, gewindelosen Abschnitt B und einen hinteren, werkzeugseitigen Gewindeabschnitt C mit einem Spanplattenschraubengewinde, welches tiefer geschnitten ist und steilere und spitzere Gewindeflanken $F_2$ aufweist als das Holzschraubengewinde des vorderen Gewindeabschnitts A mit seinen flacheren und runderen Gewindeflanken $F_1$.

Die Distanzschraube 1 besitzt eine Ausnehmung 3 in Form eines Innensechskants zum Einstecken eines hierfür passenden Werkzeugs, in diesem Falle eines Sechskantschraubendrehers oder eines Sechskantbits. Auf dem werkzeugseitigen Ende des hinteren Gewindeabschnitts C ist ein Schlagring 2 als integraler Bestandteil der gesamten Distanzschraube gebildet.

Der mittlere, gewindelose, zylindrische Abschnitt B besitzt den Nenndurchmesser $N_1$ der Distanzschraube 1. Der die Gewindeflanken $F_1$ des vorderen Gewindeabschnitts A berührende gedachte Zylinder besitzt ebenfalls den Nenndurchmesser $N_1$. Die Gewindeflanken $F_2$ des hinteren, werkzeugseitigen Gewindeabschnitts C liegen dagegen auf der Mantelinnenfläche eines gedachten, umbeschreibbaren Zylinders 4 mit dem gegenüber $N_1$ größeren Durchmeser $N_2$.

Im Bereich des Übergangs von dem hinteren Gewindeabschnitt C zu dem mittleren, gewindelosen Abschnitt B hin verjüngt sich die Schraube konisch, und zwar mit einem Konuswinkel ß von - bei dem gezeichneten Ausführungsbeispiel - etwa 10°.

Der Flankenwinkel α des Gewindes des hinteren Gewindeabschnitts C ist kleiner als 50°; vorzugsweise beträgt er, wie bei dem gezeichneten Ausführungsbeispiel, 40 ± 4°. Demgegenüber beträgt der Flankenwinkel des Gewindes des vorderen Gewindeabschnitts A gemäß DIN 7998 60 ± 6°. Somit sind die Gewindeflanken $F_2$ steiler und spitzer als die Gewindeflanken $F_1$.

Alle Gewinde besitzen etwa gleiche Ganghöhe (d.h. $H_1 = H_2$) und gleichsinnige Drehrichtung (entweder Links- oder Rechtsgewinde).

Der Gewindegang des hinteren Gewindeabschnitts C läuft zum gewindelosen Abschnitt B hin an der mit 5 bezeichneten Stelle scharfkantig aus.

## Patentansprüche

1.    Distanzschraube mit einer Ausnehmung zum Einstecken eines Werkzeugs, mit zwei, von einem gewindelosen, zylindrischen Abschnitt voneinander getrennten Gewindeabschnitten, wobei der Nenndurchmesser der Schraube im Bereich des vorderen Gewindeabschnitts und des gewindelosen Abschnitts kleiner ist als im Bereich des hinteren, werkzeugseitigen Gewindeabschnitts und wobei sich die Schraube im Bereich des Übergangs von dem hinteren Gewindeabschnitt zu dem gewindelosen Abschnitt hin konisch verjüngt, dadurch gekennzeichnet, daß das Gewinde des hinteren Gewindeabschnitts (C) tiefer geschnitten ist und steilere und spitzere Gewindeflanken ($F_2$) aufweist als das Gewinde des vorderen Gewindeabschnitts (A).

2.    Distanzschraube nach Anspruch 1, dadurch gekennzeichnet, daß das Gewinde des hinteren Gewindeabschnitts (C) selbstschneidend ausgebildet ist.

3.    Distanzschraube nach Anspruch 1 oder 2, dadurch gekennzeichnet, daß das Gewinde des vorderen Gewindeabschnitts (A) ein Holzschraubengewinde, das Gewinde des hinteren Gewindeabschnitts (C) ein Spanplattenschrauben-oder Blechschraubengewinde ist.

4.    Distanzschraube nach einem der Ansprüche 1 bis 3, dadurch gekennzeichnet, daß der Flankenwinkel (α) des Gewindes des hinteren Gewindeabschnitts (C) kleiner ist als 50°.

5.    Distanzschraube nach Anspruch 4, dadurch gekennzeichnet, daß der Flankenwinkel (α) 40 ± 4° beträgt.

6. Distanzschraube nach einem der Ansprüche 1 bis 5, dadurch gekennzeichnet, daß die Flanken (F₂) des Gewindes des hinteren Gewindeabschnitts (C) einsatzgehärtet sind.

7. Distanzschraube nach einem der Ansprüche 1 bis 6, dadurch gekennzeichnet, daß der Konuswinkel (ß) im Bereich des Übergangs vom hinteren Gewindeabschnitt (C) zum gewindelosen Abschnitt (B) weniger als 25° beträgt.

8. Distanzschraube nach Anspruch 7, dadurch gekennzeichnet, daß der Konuswinkel (ß) 10 ± 2° beträgt.

9. Distanzschraube nach einem der Ansprüche 1 bis 8, dadurch gekennzeichnet, daß der Gewindegang des hinteren Gewindeabschnitts (C) zum gewindelosen Abschnitt (B) hin scharfkantig ausläuft.

10. Distanzschraube nach einem der Ansprüche 1 bis 9, dadurch gekennzeichnet, daß alle Gewinde etwa gleiche Ganghöhe (H₁, H₂) und gleichsinnige Drehrichtung aufweisen.

11. Distanzschraube nach einem der Ansprüche 1 bis 10, dadurch gekennzeichnet, daß auf dem werkzeugseitigen Ende des hinteren Gewindeabschnitts (C) ein Schlagring (2) gebildet ist.

12. Distanzschraube nach einem der Ansprüche 1 bis 11, dadurch gekennzeichnet, daß sie als Ausnehmung (3) einen Querschlitz oder Kreuzschlitz, einen Innenvielkant oder eine Einsteckrosette zum Einstecken eines Schraubendrehers, Schlüssels oder Bits aufweist.

13. Distanzschraube nach einem der Ansprüche 1 bis 12, dadurch gekennzeichnet, daß sich das Gewinde des vorderen Gewindeabschnitts (A) zusätzlich mindestens teilweise über den Mittelabschnitt (B) erstreckt.

**Claims**

1. Spacing screw comprising a recess for insertion of a tool and having two threaded portions separated from each other by a threadless cylindrical portion, the nominal diameter of the screw in the region of the front threaded portion and of the threadless portion being less than in the region of the rear tool-side threaded portion and the screw tapering conically in the region of the transition from the rear threaded portion to the threadless portion, characterized in that the thread of the rear threaded portion (C) is cut deeper and has steeper and more pointed thread flanks (F₂) than the thread of the front threaded portion (A).

2. Spacing screw according to claim 1, characterized in that the thread of the rear threaded portion (C) is made self-cutting.

3. Spacing screw according to claim 1 or 2, characterized in that the thread of the front threaded portion (A) is a wood screw thread and the thread of the rear threaded portion (C) is a chip board screw thread or sheet metal screw thread.

4. Spacing screw according to any one of claims 1 to 3, characterized in that the flank angle ($\alpha$) of the thread of the rear threaded portion (C) is less than 50°.

5. Spacing screw according to claim 4, characterized in that the flank angle ($\alpha$) is 40 ± 4°.

6. Spacing screw according to any one of claims 1 to 5, characterized in that the flanks (F₂) of the thread of the rear threaded portion (C) are case-hardened.

7. Spacing screw according to any one of claims 1 to 6, characterized in that the cone angle ($\beta$) in the region of the transition from the rear threaded portion (C) to the threadless portion (B) is less than 25°.

8. Spacing screw according to claim 7, characterized in that the cone angle ($\beta$) is 10 ± 2°.

9. Spacing screw according to any one of claims 1 to 8, characterized in that the flight of the rear threaded portion (C) terminates sharp-edged towards the threadless portion (B).

10. Spacing screw according to any one of claims 1 to 9, characterized in that all the threads have substantially the same pitch (H₁, H₂) and the same direction of rotation.

11. Spacing screw according to any one of claims 1 to 10, characterized in that on the tool-side end of the rear threaded portion (C) a strike ring (2) is formed.

12. Spacing screw according to any one of claims 1 to 11, characterized in that it comprises as recess (3) a transverse slot or cross slot, a polygonal socket or an insert rosette for inserting a screwdriver, spanner or bit.

**13.** Spacing screw according to any one of claims 1 to 12, characterized in that the thread of the front threaded portion (A) additionally extends at least partially over the centre portion (B).

## Revendications

**1.** Vis d'écartement présentant un évidement pour l'introduction d'un outil d'entraînement, et ayant deux sections filetées séparées l'une de l'autre par une section cylindrique non filetée, le diamètre nominal de la vis dans la zone de la section filetée avant et de la section non filetée étant plus faible que dans la zone de la section filetée arrière située du côté de l'outil, et la zone de transition de la section filetée arrière vers la section non filetée de la vis ayant une forme conique de rétrécissement, caractérisée en ce que le filetage de la section filetée arrière (C) est taillé plus profond et présente des flancs de filet $(F_2)$ plus raides et plus aigus que le filetage de la section filetée avant (A).

**2.** Vis d'écartement selon la revendication 1, cractérisée en ce que le filetage de la section filetée arrière (C) est réalisé sous la forme d'un filetage auto-taraudeur.

**3.** Vis d'écartement selon l'une des revendications 1 et 2, caractérisée en ce que le filetage de la section filetée avant (A) est du type filetage de vis à bois, et le filetage de la section filetée arrière (C) est du type filetage de vis pour bois aggloméré, ou de vis à tôle.

**4.** Vis d'écartement selon l'une des revendications 1 à 3, caractérisée en ce que l'angle des flancs de filet $(\alpha)$ du filetage de la section filetée arrière (C) est inférieur à 50°.

**5.** Vis d'écartement selon la revendication 4, caractérisée en ce que ledit angle des flancs de filet $(\alpha)$ est de 40 ± 4°.

**6.** Vis d'écartement selon l'une des revendications 1 à 5, caractérisée en ce que les flancs $(F_2)$ des filets de la section filetée arrière (C) sont cémentés en surface.

**7.** Vis d'écartement selon l'une des revendications 1 à 6, caractérisée en ce que l'angle $(\beta)$ du cône de la zône de transition de la section filetée arrière (C) vers la section non filetée (B) est inférieur à 25 °.

**8.** Vis d'écartement selon la revendication 7, caractérisée en ce que l'angle $(\beta)$ dudit cône est de 10 ± 2°.

**9.** Vis d'écartement selon l'une des revendications 1 à 8, caractérisée en ce que le pas de vis de la section filetée arrière (C) se termine par une arête coupante du côté de la section non filetée (B).

**10.** Vis d'écartement selon l'une des revendications 1 à 9, caractérisée en ce que tous les filetages présentent sensiblement le même pas $(H_1, H_2)$ et le même sens de pas.

**11.** Vis d'écartement selon l'une des revendications 1 à 10, caractérisée en ce qu'une bague de frappe (2) est formée à l'extrémité de la section filetée arrière (C) côté outil.

**12.** Vis d'écartement selon l'une des revendications 1 à 11, caractérisée en ce qu'elle présente comme évidement (3) une fente transversale, une fente cruciforme, un évidement à pans creux ou une rosette femelle, pour l'engagement d'un tourne-vis, d'une clé, ou d'une clé mâle.

**13.** Vis d'écatement selon l'une des revendications 1 à 12, caractérisée en ce que le filetage de la section filetée avant (A) s'étend aussi, au moins partiellement, sur la section médiane (B).

EP 0 314 950 B1

FIG. 1

FIG. 2

7